# FASCICULE DE BREVET EUROPEEN

(11) **EP 1 030 049 B1**
(45) Date de publication et mention de la délivrance du brevet: **19.01.2005**
(21) Numéro de dépôt: 00400440.4
(22) Date de dépôt: 17.02.2000
(51) Int. Cl.: F02K 9/38

(54) **Moteur fusée à propergol solide avec dispositif de sécurité vis à vis d' agressions thermiques**
Festtreibstoffraketenmotor mit Sicherheitsvorrichtung für starke thermische Spannungen
Solid propellant rocket motor with safety device for conditions of intense thermal stresses

(30) Priorité: 17.02.1999 FR 9901930
(43) Date de publication de la demande: 23.08.2000
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Biz, Philippe, 33160 Saint Medard en Jalles (FR)
(74) Mandataire: Joly, Jean-Jacques

(56) Documents cités:
- WO-A-97/02464
- US-A- 3 887 991
- US-A- 5 044 154
- US-A- 5 311 820
- US-A- 5 394 803
- US-A- 5 735 114

## Description

### Domaine de l'invention

L'invention concerne les moteurs fusées à propergol solide équipant des munitions, et plus particulièrement ceux protégés vis-à-vis d'une agression thermique accidentelle susceptible de rendre le moteur propulsif de façon intempestive.

### Arrière-plan de l'invention

Un moteur fusée à propergol solide comprend habituellement une enveloppe cylindrique entourant le propergol et munie à ses extrémités axiales d'un fond arrière et d'un fond avant.

La mise à feu intempestive d'une munition munie d'un tel moteur fusée, par suite d'une élévation de température au-delà du seuil d'allumage du propergol, par exemple en raison d'un incendie, peut entraîner des pertes en vies humaines et des dégâts considérables.

Pour atténuer ce risque, il a été proposé de réaliser le moteur fusée de telle sorte que l'enveloppe perde son intégrité ou qu'au moins l'un des deux fonds se désolidarise de l'enveloppe sous l'effet d'un échauffement important, avant d'atteindre la température d'allumage du propergol. Ainsi, les effets d'une mise à feu intempestive restent limités.

A cet effet, il est connu de relier au moins l'un des deux fonds à l'enveloppe par des moyens de liaison qui, dans une position de verrouillage, relient l'enveloppe au fond en direction axiale, et qui sont maintenus dans cette position par des moyens de maintien en matériau thermofusible. Ce matériau est choisi pour fondre à une température supérieure à la température environnante maximale à laquelle le moteur fusée est normalement exposé, et inférieure à la température d'allumage du propergol. La fusion de ce matériau libère les moyens de liaison, ce qui provoque la désolidarisation entre l'enveloppe et le fond.

Un tel état de la technique est illustré notamment par les documents WO 97/02462 et US 5 311 820.

Le document WO 97/02462 montre un moteur fusée dans lequel un corps est lié à une tuyère par une bague de maintien formée de secteurs espacés les uns des autres. Chaque secteur présente un bord en saillie qui s'engage dans une rainure du corps et une surface d'appui contre l'embase de la tuyère. Les secteurs sont maintenus en place par des broches en matériau thermofusible qui traversent les secteurs en direction axiale et s'engagent dans des trous borgnes formés dans l'embase de la tuyère. Des ressorts interposés radialement entre les secteurs et le corps permettent d'éjecter les secteurs lorsque les broches fondent. On note que les broches constituant les moyens de maintien des secteurs sont simplement maintenues par leur extrémité pénétrant dans les trous borgnes de l'embase de la tuyère. Un effort important doit être exercé par les ressorts pour éviter le retrait accidentel des broches. Mais comme les broches sont sollicitées en cisaillement par les ressorts, elles doivent être dimensionnées pour supporter cette contrainte.

Le document US 5 311 820 montre des moyens de liaison qui sont sollicités élastiquement en position de verrouillage par les moyens de maintien.

Dans un premier mode de réalisation décrit dans ce document, qui est montré très schématiquement par la figure 1 des dessins ci-annexés, les moyens de liaison entre l'enveloppe 10 et le fond arrière 12 sont constitués par une bague fendue expansible 14. Celle-ci est logée en partie dans un logement annulaire 10a formé dans la paroi interne de l'enveloppe et en partie dans un logement annulaire formé dans la paroi périphérique du fond. La bague 14 est maintenue en position rétractée par des pièces 16 en matériau thermofusible qui pénètrent à l'intérieur du logement 10a. Les pièces 16 sont mises en place par coulée de leur matériau constitutif à travers des perçages radiaux 10b qui traversent la paroi de l'enveloppe, tandis que la bague 14 est maintenue en position rétractée par des vis introduites à travers d'autres perçages radiaux et qui appuient sur la périphérie de la bague. Si, ultérieurement, une agression thermique accidentelle provoque la fusion des pièces 16, la bague 14 est libérée et se loge entièrement dans le logement 10a, dont les dimensions sont prévues à cet effet. Le fond 12 est alors désolidarisé de l'enveloppe.

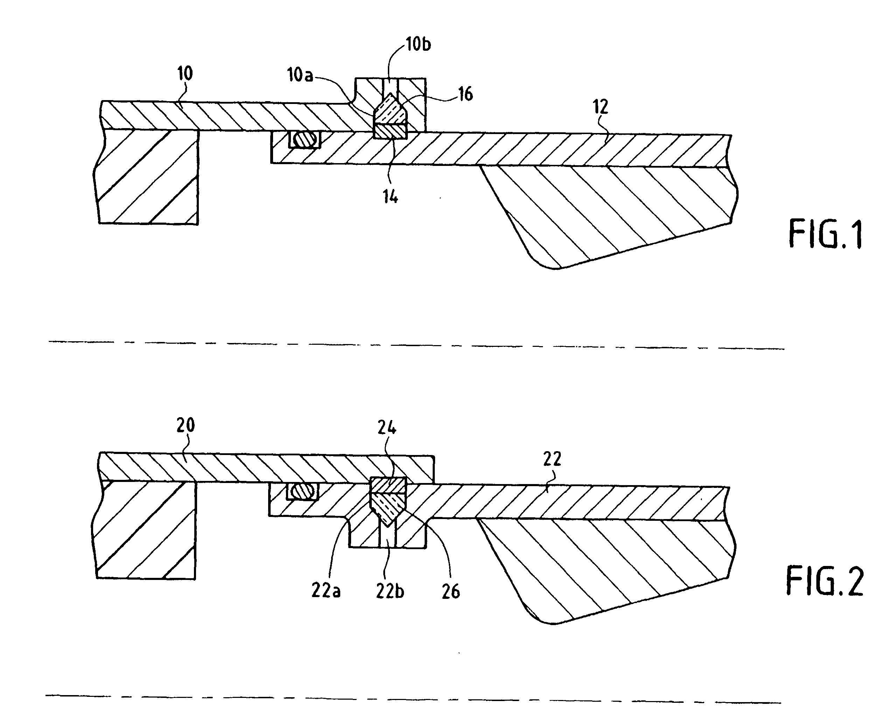

Dans un deuxième mode de réalisation décrit dans ce même document, et qui est montré schématiquement par la figure 2 des dessins ci-annexés, les moyens de liaison entre l'enveloppe 20 et le fond arrière 22 sont constitués par une bague fendue rétractable 24. Celle-ci est logée en partie dans un logement annulaire 22a formé dans la paroi périphérique du fond et en partie dans un logement annulaire formé dans la paroi interne de l'enveloppe. La bague 24 est maintenue en position expansée par des pièces 26 qui pénètrent à l'intérieur du logement 22a. Les pièces 26 sont mises en place par coulée de leur matériau constitutif à travers des perçages radiaux 22b qui traversent la paroi périphérique du fond 22. A un stade ultérieur, la fusion des pièces 26 libère la bague 24 qui se rétracte entièrement dans le logement 22a, ce qui désolidarise le fond 22 de l'enveloppe.

Dans ces deux modes de réalisation connus, la mise en place des pièces de maintien 16, 26 n'est pas aisée. En effet, celles-ci sont formées par coulée de leur matériau constitutif à travers des perçages, et la bague 14 ou 24 doit être maintenue sous sollicitation élastique par un outillage ou des pièces auxiliaires jusqu'à solidification de ce matériau. En outre, dans le premier mode de réalisation, la nécessité de prévoir un logement 10a suffisamment profond pour que la bague 14 puisse s'y loger entièrement impose de prévoir une surépaisseur sensible de la paroi de l'enveloppe 10, puisque le logement 10a est formé à un niveau où la paroi doit supporter les pressions engendrées par les gaz de combustion après mise à feu du moteur fusée. Il en résulte une pénalisation importante au niveau de la masse du moteur fusée, d'autant que pour des soucis d'aérodynamisme, cette surépaisseur pourrait ne pas être uniquement localisée au niveau du logement 10a.

De plus encore, le deuxième mode de réalisation n'apparaît guère réaliste. D'abord, les goupilles 26 ne sont pas exposées directement au milieu environnant. Ensuite, et surtout, lors du fonctionnement normal du moteur fusée, les gaz chauds produits peuvent venir au contact des pièces 26 à travers les perçages 22b et provoquer leur fusion indésirable, conduisant à la destruction de la munition.

### Objet et résumé de l'invention

L'invention a pour but de proposer un moteur fusée à propergol solide à sécurité améliorée vis-à-vis d'agressions thermiques qui ne présente pas les inconvénients précités.

En particulier, l'invention a pour but d'apporter cette sécurité améliorée sans que cela entraîne une mise en oeuvre complexe et sans mettre en péril l'intégrité du moteur fusée lors de son fonctionnement normal.

Ces buts sont atteints grâce à un moteur fusée du type comprenant une enveloppe cylindrique, un fond avant obturant l'enveloppe à l'une des deux extrémités axiales de celle-ci, un fond arrière lié à l'enveloppe à son autre extrémité axiale, au moins l'un des deux fonds étant relié à l'enveloppe par des moyens de liaison élastiquement déformables engagés en partie dans un premier logement formé dans la paroi interne de l'enveloppe et en partie dans un deuxième logement formé dans le fond afin d'immobiliser celui-ci axialement par rapport à l'enveloppe, et les moyens de liaison étant maintenus en position à l'état précontraint par des moyens de maintien en matériau thermofusible, de sorte que la fusion des moyens de maintien sous l'effet d'une agression thermique libère les moyens de liaison pour leur permettre de se loger dans l'un desdits logements et de désolidariser le fond de l'enveloppe, moteur fusée dans lequel le premier logement est formé dans une partie de l'enveloppe formant jupe entourant au moins partiellement le fond de telle manière qu'un espace libre soit défini entre la jupe et la face externe du fond, et le deuxième logement est formé à la périphérie du fond et s'ouvre à la face externe de celui-ci, de sorte qu'un accès direct est offert à travers l'espace libre pour la mise en place des moyens de liaison et de maintien depuis l'extérieur du fond.

Grâce à cette disposition, les moyens de maintien en matériau thermofusible peuvent facilement être mis en place, à l'état solide. Ils sont en outre exposés directement au milieu environnant et ne sont pas exposés au contact des gaz de combustion produits lors du fonctionnement normal du moteur fusée.

De préférence, selon un premier mode de réalisation, les moyens de liaison comportent une bague rétractable qui s'appuie sur des éléments de maintien engagés au moins partiellement dans le deuxième logement, celui-ci ayant une forme annulaire telle que la bague est susceptible de se loger entièrement dans le deuxième logement après fusion des éléments de maintien. Les moyens de maintien peuvent alors être constitués par des pions des pièces en forme de secteurs, voire une couronne complète, engagés dans le fond en direction axiale depuis la face externe du fond.

Selon un deuxième mode de réalisation, les moyens de liaison comprennent une bague expansible qui s'appuie sur des éléments de maintien engagés au moins partiellement dans le premier logement, celui-ci ayant une forme annulaire telle que la bague est susceptible de se loger entièrement dans le premier logement après fusion des éléments de maintien. Les moyens de maintien sont constitués par une pluralité de plots, chaque plot ayant une partie formant tête sur laquelle s'appuie la bague expansible et une partie faisant saillie à partir de la tête dans un perçage radial formé à travers la paroi de la jupe.

### Brève description des dessins

Dans les dessins annexés :
- les figures 1 et 2, déjà décrites, illustrent schématiquement de façon partielle deux modes de réalisation d'un moteur fusée à sécurité améliorée, conformément à l'art antérieur ;
- la figure 3 est une vue partielle en coupe longitudinale d'un moteur fusée à sécurité améliorée selon un premier mode de réalisation préféré de l'invention ;
- la figure 4 est une vue agrandie d'un détail de la figure 3 ;
- la figure 5 est une vue en bout du détail de la figure 4 ;
- la figure 6 est une vue du détail de la figure 4, après fusion des moyens de maintien ;
- les figures 7 et 8 sont des vues similaires à celles des figures 4 et 5 montrant une variante de réalisation de pièces de maintien en matériau thermofusible ;
- la figure 9 est une vue partielle en coupe longitudinale d'un moteur fusée à sécurité améliorée selon un deuxième mode de réalisation de l'invention ;
- la figure 10 est une vue agrandie d'un détail de la figure 9 ; et
- la figure 11 est une vue du détail de la figure 10, après fusion des moyens de maintien.

### Description détaillée de modes de réalisation de l'invention

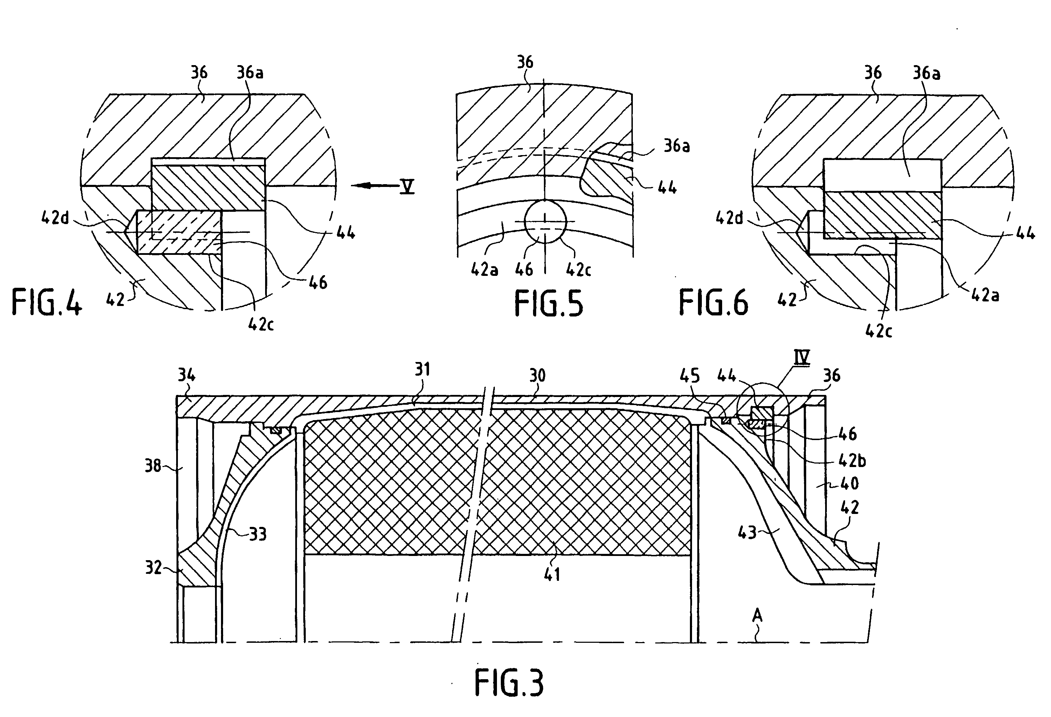

La figure 3 illustre un premier mode de réalisation de moteur fusée conforme à l'invention, destiné à équiper une munition, telle qu'un missile.

Le moteur fusée comprend une enveloppe 30 qui délimite une chambre de combustion avec un fond avant 32 et un fond arrière 42. Une tuyère (non représentée) peut être reliée au fond arrière 42. Un bloc de propergol solide 41 est logé dans l'enveloppe.

De façon bien connue en soi, les parois internes de l'enveloppe 30, du fond avant 32 et du fond arrière 42 sont munies de revêtement de protection thermique 31, 33, 43.

A ses extrémités longitudinales, l'enveloppe 30 se prolonge par des parties 34, 36 formant jupes qui entourent au moins partiellement les fonds avant et arrière 32, 42. Des espace libres 38, 40 sont définis respectivement entre la jupe 34 et le fond avant 32 et entre la jupe 36 et le fond arrière 42.

Le fond avant 32 est relié à l'enveloppe 30 par tout moyen connu, par exemple par des vis ou pions (non représentés) qui pénètrent radialement dans la paroi de la jupe 34 et dans la partie périphérique du fond 32.

La liaison en sens longitudinal entre l'enveloppe 30 et le fond arrière 42 est assurée par une bague fendue rétractable, ou jonc 44. La bague 44 est partiellement logée dans un logement annulaire 42a formé à la périphérie du fond 42 et s'ouvrant à la face externe 42b de celui-ci, et dans un logement annulaire 30a formé dans la face interne de l'enveloppe 30 (figures 3, 4, 5). L'étanchéité entre la périphérie du fond 42 et l'enveloppe 30 est assurée par un joint torique 45.

La bague rétractable 44 est sollicitée élastiquement à l'état expansé par des pions 46 qui sont répartis régulièrement dans le logement 42a. Chaque pion 46, de forme cylindrique, est disposé avec son axe parallèle à l'axe longitudinal A de l'enveloppe 30. Chaque pion 46 repose dans une rainure longitudinale 42c à section en arc de cercle formée dans le fond du logement 42 (figure 5) et a une extrémité 46a qui s'engage dans un perçage borgne 42d formé dans le fond 42, dans la continuité de la rainure 42c (figure 4).

Les pions 46 sont en un matériau thermofusible ayant un point de fusion supérieur aux températures les plus élevées auxquelles le moteur fusée est susceptible d'être exposé avant son utilisation, et inférieur à la température minimale d'auto-allumage du bloc de propergol 41. Le matériau thermofusible est par exemple un alliage à base d'étain ayant un point de fusion adapté en fonction de la température d'auto-inflammation du propergol utilisé, par exemple compris entre 200°C et 250°C.

Lors du montage du moteur fusée, le fond arrière 42 est mis en place sur l'enveloppe 30. Ensuite, la bague 44 est mise en place en étant introduite depuis l'extérieur du fond 42, directement à travers l'espace libre 40, dans le logement 42a puis en étant sollicitée élastiquement à l'état expansé pour pénétrer dans le logement 36a. Les pions 46 sont alors mis en place en direction longitudinale, puis la bague 44 est relâchée. La bague 44 s'appuie alors sur les pions 46, en restant sollicitée élastiquement et sans sortir du logement 36a. Dans cette position (figure 4), la bague 44 verrouille le fond 42 en direction longitudinale.

Si, en raison d'un échauffement intempestif, la température du milieu environnant dépasse le point de fusion des pions 36, ceux-ci, exposés au milieu environnant à l'extérieur du fond 42, fondent. La bague 44 est alors libre de se rétracter et de se loger entièrement dans le logement 42a (figure 6), la profondeur de celui-ci étant déterminée à cet effet. La bague 44 ayant quitté le logement 36a, le fond 42 est désolidarisé de l'enveloppe 30. Un allumage intempestif du propergol 41 ne risque alors pas de rendre le moteur fusée propulsif.

On notera que le logement 36a est formé dans la jupe 36, dans une zone où celle-ci n'est pas fortement sollicitée, et que la profondeur du logement 36a est limitée à ce qui est nécessaire pour recevoir une partie de l'épaisseur de la bague 44, par exemple environ la moitié. Il n'est de ce fait pas indispensable de prévoir une surépaisseur localisée de l'enveloppe 30 au niveau du logement 36a.

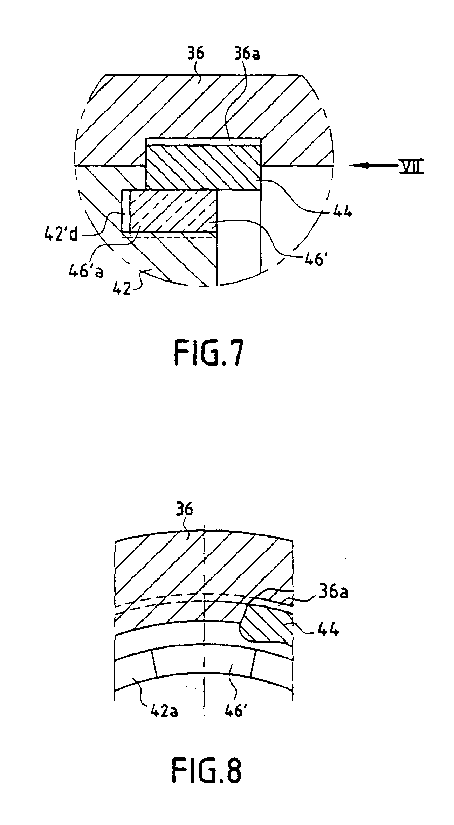

En variante, les pions cylindriques 46 peuvent être remplacés par des pièces de maintien en forme de secteurs de couronne 46' (figures 7, 8) qui s'appuient sur le fond du logement 42a. Les secteurs 46' peuvent présenter une partie 46'a également en forme de secteur, ou réduite à une partie cylindrique, qui s'engage dans un logement correspondant 42'd formé dans le fond 42.

En fonction des dimensions et des caractéristiques de la bague 44, notamment de la pression exercée par celle-ci, les moyens de maintien pourront être réalisés non pas sous forme de secteurs de couronne, mais sous forme d'une couronne complète.

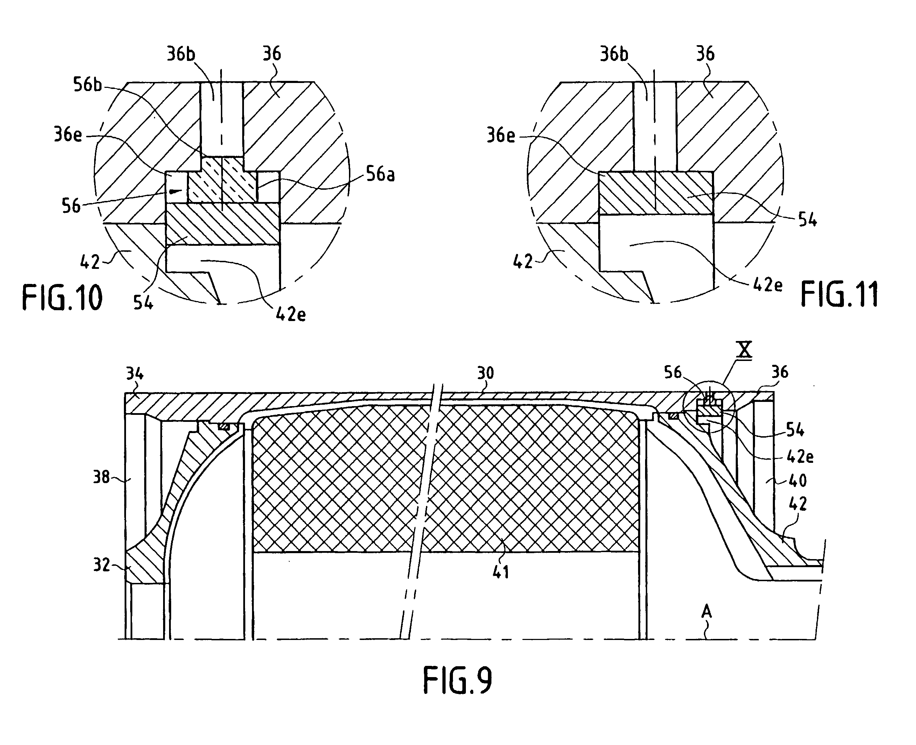

La figure 9 illustre un deuxième mode de réalisation de l'invention qui se distingue de celui de la figure 3 par le mode de liaison entre le fond 42 et l'enveloppe 30.

Le fond 42 est relié à l'enveloppe 30 par une bague expansible fendue, ou jonc 54. La bague 54 est logée en partie dans un logement annulaire 36e formé dans la paroi interne de la jupe 36 et en partie dans un logement annulaire 42e formé à la périphérie du fond 42, du côté extérieur de celui-ci, de sorte que le logement 42e s'ouvre à la face externe 42b du fond 42 (figures 9, 10). La bague 54 immobilisée dans le logement 36e maintient le fond 42 en place radialement par appui sur la face radiale du logement 42e.

La bague expansible 54 est sollicitée élastiquement à l'état rétracté par des plots 56 répartis régulièrement dans le logement 36e. Chaque plot 56 a une tête 56a interposée entre la bague 54 et le fond du logement 36e et prolongée par une partie cylindrique 56b engagée dans un perçage radial 36b traversant la paroi de la jupe 36. La tête 56a peut être de forme cylindrique, de même axe que la partie 56b ou être en forme de secteur, s'appuyant sur le fond du logement 36e, de part et d'autre du perçage 36b.

Les plots 56 sont en un matériau thermofusible similaire à celui des pions 46 du premier mode de réalisation.

Lors du montage du moteur fusée, le fond arrière 42 et les plots 56 sont mis en place. Les plots 56 peuvent être emmanchés à force, sertis ou collés. Ensuite, la bague 54 est mise en place en étant simplement maintenue en position rétractée pour pouvoir être insérée à travers la jupe 36 et dans le logement 42e s'ouvrant longitudinalement à la surface externe du fond 42. La bague 54 étant alors relâchée, elle vient en appui sur les têtes 56a des plots 56. Dans cette position, la bague 54, qui est toujours sollicitée élastiquement, verrouille le fond 42 en direction longitudinale.

Si, en raison d'un échauffement intempestif la température du milieu environnant dépasse le point de fusion des plots 36, ceux-ci, exposés au milieu environnant à travers les perçages 36b, fondent. La bague 54 est alors libre de s'expanser et se loger entièrement dans le logement 36e (figure 11), la profondeur de celui-ci étant déterminée à cet effet. Le fond 42 est alors désolidarisé de l'enveloppe 30.

On notera que le logement 36e étant formé dans l'enveloppe 30 à un niveau où celle-ci n'est pas fortement sollicitée, seule une légère surépaisseur de celle-ci est nécessaire, laquelle surépaisseur peut être formée du côté interne de la jupe 36, n'affectant pas l'aérodynamisme. On notera aussi que, dans les deux modes de réalisation décrits, une liaison entre le fond avant 32 et l'enveloppe 30 similaire à celle réalisée entre le fond arrière 42 et l'enveloppe 30 pourra être prévue.

## Revendications

1. Moteur fusée à propergol solide à sécurité améliorée vis-à-vis d'agression thermique, comprenant une enveloppe cylindrique (30); un fond avant (32) obturant l'enveloppe à l'une des deux extrémités axiales de celle-ci, un fond arrière (42) lié à l'enveloppe à son autre extrémité axiale ; des moyens de liaison (44 ; 54) reliant au moins l'un des deux fonds à l'enveloppe, les moyens de liaison étant d'une part engagés en partie dans un premier logement (36a; 36e) formé dans la paroi interne de l'enveloppe et coopérant d'autre part avec le fond afin d'immobiliser celui-ci axialement par rapport à l'enveloppe ; et des moyens de maintien (46 ; 46' ; 56) des moyens de liaison, les moyens de maintien étant en matériau thermofusible de sorte que la fusion des moyens de maintien sous l'effet d'une agression thermique libère les moyens de liaison pour permettre la désolidarisation du fond par rapport à l'enveloppe ; le premier logement (36a ; 36e) étant formé dans une partie de l'enveloppe formant jupe (36) entourant au moins partiellement le fond (42) de telle manière qu'un espace libre (40) est défini entre la jupe (36) et la face externe (42b) du fond et qu'un accès direct est offert à travers l'espace libre pour la mise en place des moyens de liaison (44 ; 54) et des moyens de maintien (46 ; 46' ; 56) depuis l'extérieur du fond ; **caractérisé en ce que** :
- les moyens de liaison (44 ; 54) sont élastiquement déformables et sont maintenus à l'état élastiquement déformé par les moyens de maintien (46 ; 46' ; 56) pour s'engager en partie dans le premier logement (36a, 36e) formé dans la paroi interne de l'enveloppe et en partie dans un deuxième logement (42a ; 42e) formé dans le fond (42) et s'ouvrant à la face externe (42b) de celui-ci; et
- les moyens de maintien (46 ; 46' ; 56) sont comprimés entre les moyens de liaison (44 ; 54) et une paroi du premier ou du deuxième logement.

2. Moteur fusée selon la revendication 1, **caractérisé en ce que** le deuxième logement (42a) formé dans le fond a une forme annulaire et les moyens de liaison comprennent une bague élastiquement déformable (44) qui est maintenue dans un état expansé par les moyens de maintien (46 ; 46') engagés dans le deuxième logement (42a) et comprimés entre la bague (44) et une paroi annulaire interne du deuxième logement, la forme annulaire du deuxième logement (42a) étant telle que la bague (44) est susceptible de s'y loger entièrement par rétraction après fusion des moyens de maintien (46 ; 46').

3. Moteur fusée selon la revendication 2, **caractérisé en ce que** les moyens de maintien sont constitués par des pions (46) reposant dans des rainures longitudinales (42c) formées dans la paroi annulaire interne du deuxième logement.

4. Moteur fusée selon la revendication 2, **caractérisé en ce que** les moyens de maintien sont constitués par des pièces en forme de secteurs (46') interposés entre la bague (44) et la paroi annulaire interne du deuxième logement.

5. Moteur fusée selon la revendication 2, **caractérisé en ce que** les moyens de maintien sont constitués par une pièce en forme de couronne interposée entre la bague (44) et la paroi annulaire interne du deuxième logement.

6. Moteur fusée selon la revendication 1, **caractérisé en ce que** le premier logement (36e) formé dans l'enveloppe a une forme annulaire et les moyens de liaison comprennent une bague élastiquement déformable (54) qui est maintenue dans un état rétracté par les moyens de maintien (56) engagés dans le premier logement (36e) et comprimés entre la bague (54) et une paroi annulaire exteme du premier logement, la forme annulaire du premier logement (36e) étant telle que la bague (54) est susceptible de s'y loger entièrement par expansion après fusion des moyens de maintien (56).

7. Moteur fusée selon la revendication 6, **caractérisé en ce que** les moyens de maintien sont constitués par une pluralité de plots (56), chaque plot ayant une partie formant tête (56a) sur laquelle s'appuie la bague expansible (54) et une partie (56b) faisant saillie à partir de la tête dans un perçage radial (36b) formé à travers la paroi de la jupe (36).

## Claims

1. Solid propellant rocket motor with improved safety against thermal stresses, comprising a cylindrical case (30); a forward end part (32) closing the case at one of its two axial ends; an aft end part (42) joined to the case at its other axial end; connection means (44;54) connecting at least one of the two end parts to the case, the connection means firstly being partly engaged in a first housing (36a;36e) formed in the inner wall of the case and secondly cooperating with the end part for its axial immobilization relative to the case; and maintaining means (46;46';56) for the connection means, the maintaining means being in heat fusible material so that the fusion of the maintaining means under the effect of thermal stresses releases the connection means to allow the separation of the end part from the case; the first housing (35a;36e) being formed in a part of the case forming a skirt (36) surrounding the end part (42) at least partly so that a free space (40) is defined between the skirt (36) and the outer surface (42b) of the end part and a direct access is provided through the free space for positioning the connection means (44;54) and maintaining means (46;46';56) from outside the end part; **characterized in that**:
- the connection means (44;54) are elastically deformable and are held in an elastically deformed state by the maintaining means (46;46';56) so that they can engage partly in the first housing (36a,36e) formed in the inner wall of the case and partly in the second housing (42a;42e) formed in the end part (42) and opening onto its outer surface (42b); and
- the maintaining means (46;46';56) are compressed between the connection means (44;54) and a wall of the first or second housing.

2. Rocket motor as in claim 1, **characterized in that** the second housing (42a) formed in the end part is of annular shape and the connection means comprise an elastically deformable ring (44) which is held in an expanded state by the maintaining means (46;46') engaged in the second housing (42a) and compressed between the ring (44) and an inner annular wall of the second housing, the annular shape of the second housing (42a) being such that the ring (44) is able to fit entirely therein by retraction after fusion of the maintaining means (46;46').

3. Rocket motor as in claim 2, **characterized in that** the maintaining means consist of dowel pins (46) resting in longitudinal grooves (42c) formed in the inner annular wall of the second housing.

4. Rocket motor as in claim 2, **characterized in that** the maintaining means consist of parts in the form of sectors (46') inserted between the ring (44) and the inner annular wall of the second housing.

5. Rocket motor as in claim 2, **characterized in that** the maintaining means consist of a crown-shaped part inserted between the ring (44) and the inner annular wall of the second housing.

6. Rocket motor as in claim 1, **characterized in that** the first housing (36e) formed in the case is of annular shape and the connection means comprise an elastically deformable ring (54) which is held in a retracted state by the maintaining means (56) engaged in the first housing (36e) and compressed between the ring (54) and an outer annular wall of the first housing, the annular shape of the first housing (36e) being such that the ring (54) is able to fit entirely therein by expansion after fusion of the maintaining means (56).

7. Rocket motor as in claim 6, **characterized in that** the maintaining means consist of a plurality of pads (56), each pad having a part that forms a head (56a) on which the expandable ring (54) rests and a part (56b) projecting from the head into a radial bore (36b) formed through the wall of the skirt (36).

## Patentansprüche

1. Feststoffraketentriebwerk mit verbesserter Sicherheit gegenüber starken thermischen Spannungen, mit einer zylindrischen Hülle (30); einem vorderen Boden (32), welcher die Hülle an einem ihrer beiden axialen Enden verschließt; einem hinteren Boden (42), welcher mit der Hülle an ihrem anderen axialen Ende verbunden ist; Verbindungsmitteln (44; 54), die wenigstens den einen der beiden Böden mit der Hülle verbinden, wobei die Verbindungsmittel einerseits teilweise in eine erste Aufnahme (36a; 36e) eingreifen, die in der Innenwand der Hülle ausgebildet ist, und andererseits mit dem Boden zusammenwirken, um diesen gegenüber der Hülle axial festzulegen; und mit Mitteln (46; 46'; 56) zum Halten der Verbindungsmittel, wobei die Haltemittel aus warmschmelzbarem Material bestehen, so daß das Schmelzen der Haltemittel unter der Wirkung eines Wärmeangriffs die Verbindungsmittel freigibt, um die Trennung des Bodens gegenüber der Hülle zu ermöglichen; wobei die erste Aufnahme (36a; 36e) in einem einen Mantel (36) bildenden Teil der Hülle gebildet ist, der den Boden (42) wenigstens teilweise derart umgibt, daß zwischen dem Mantel (36) und der Außenfläche (42b) des Bodens ein Freiraum (40) definiert wird und daß durch den Freiraum hindurch ein direkter Zugang für das Einsetzen der Verbindungsmittel (44; 54) und der Haltemittel (46; 46'; 56) von außerhalb des Bodens vorliegt; **dadurch gekennzeichnet, daß**
- die Verbindungsmittel (44; 54) elastisch verformbar sind und in elastisch verformtem Zustand durch die Haltemittel (46; 46'; 56) gehalten werden, um zum Teil in die in der Innenwand der Hülle gebildete erste Aufnahme (36a, 36e) und zum Teil in eine zweite Aufnahme (42a; 42e), die in dem Boden (42) ausgebildet ist und sich an dessen Außenseite (42b) öffnet, einzugreifen; und daß
- die Haltemittel (46; 46'; 56) zwischen den Verbindungsmitteln (44; 54) und einer Wand der ersten oder der zweiten Aufnahme zusammengedrückt sind.

2. Raketentriebwerk nach Anspruch 1, **dadurch gekennzeichnet, daß** die in dem Boden gebildete zweite Aufnahme (42a) ringförmig ausgebildet ist und die Verbindungsmittel einen elastisch verformbaren Ring (44) aufweisen, der in einem gedehnten Zustand durch die Haltemittel (46; 46') gehalten wird, die in die zweite Aufnahme (42a) eingreifen und zwischen dem Ring (44) und einer ringförmigen Innenwand der zweiten Aufnahme zusammengedrückt sind, wobei die Ringform der zweiten Aufnahme (42a) derart ist, daß der Ring (44) geeignet ist, nach Schmelzen der Haltemittel (46; 46') durch Zusammenziehung vollkommen darin aufgenommen zu werden.

3. Raketentriebwerk nach Anspruch 2, **dadurch gekennzeichnet, daß** die Haltemittel von Stiften (46) gebildet sind, die in Längsnuten (42c) ruhen, welche in der ringförmigen Innenwand der zweiten Aufnahme gebildet sind.

4. Raketentriebwerk nach Anspruch 2, **dadurch gekennzeichnet, daß** die Haltemittel von sektorenförmigen Teilen (46') gebildet sind, die zwischen dem Ring (44) und der ringförmigen Innenwand der zweiten Aufnahme eingefügt sind.

5. Raketentriebwerk nach Anspruch 2, **dadurch gekennzeichnet, daß** die Haltemittel von einem kranzförmigen Teil gebildet sind, das zwischen dem Ring (44) und der ringförmigen Innenwand der zweiten Aufnahme eingefügt ist.

6. Raketentriebwerk nach Anspruch 1, **dadurch gekennzeichnet, daß** die in der Hülle ausgebildete erste Aufnahme (36e) eine Ringform aufweist und die Verbindungsmittel einen elastisch verformbaren Ring (54) enthalten, der in einem zusammengezogenen Zustand durch die Haltemittel (56), welche in die erste Aufnahme (36e) eingreifen und zwischen dem Ring (54) und einer ringförmigen Außenwand der ersten Aufnahme zusammengedrückt sind, gehalten wird, wobei die Ringform der ersten Aufnahme (36e) derart ist, daß der Ring (54) geeignet ist, nach Schmelzen der Haltemittel (56) durch Ausdehnung vollständig darin aufgenommen zu werden.

7. Raketentriebwerk nach Anspruch 6, **dadurch gekennzeichnet, daß** die Haltemittel von einer Vielzahl von Stiften (56) gebildet sind, wobei jeder Stift ein Teil aufweist, das einen Kopf (56a) bildet, an dem der dehnbare Ring (54) anliegt, sowie ein Teil (56b), das ausgehend von dem Kopf in eine durch die Wand des Mantels (36) hindurch ausgebildete Radialbohrung (36b) vorspringt.
